# EUROPÄISCHE PATENTSCHRIFT

(11) **EP 1 766 255 B1**
(45) Veröffentlichungstag und Bekanntmachung des Hinweises auf die Patenterteilung: **08.07.2009**
(21) Anmeldenummer: 05732337.0
(22) Anmeldetag: 20.04.2005
(51) Int. Cl.: F16D 55/226

(54) **BREMSEINRICHTUNG MIT BREMSSATTELBEFESTIGUNG**
BRAKING DEVICE WITH A BRAKE CALIPER ATTACHMENT
DISPOSITIF DE FREINAGE AVEC FIXATION D' TRIER DE FREIN

(30) Priorität: 15.07.2004 DE 202004011159 U; 18.08.2004 DE 202004013006 U
(43) Veröffentlichungstag der Anmeldung: 28.03.2007
(73) Patentinhaber: SAF-HOLLAND GmbH, 63856 Bessenbach-Keilberg (DE)
(72) Erfinder: DREWES, Olaf, Jörg, 63743 Aschaffenburg (DE)
(74) Vertreter: KEIL & SCHAAFHAUSEN Patentanwälte
(86) Internationale Anmeldenummer: PCT/EP2005/004722
(87) Internationale Veröffentlichungsnummer: WO 2006/007892

(56) Entgegenhaltungen:
- EP-A- 1 437 521
- WO-A-01/92749
- DE-A1- 4 303 417
- US-B1- 6 305 509
- US-B1- 6 315 087
- US-B1- 6 343 675

## Beschreibung

Die Erfindung bezieht sich auf eine Bremseinrichtung für um Achszapfen drehbare Räder eines Kraftfahrzeuges, mit einer Bremssattelbefestigung, welche einen auf der Fahrzeugachse festlegbaren achsseitigen Träger und einen daran mittels Schrauben lösbar befestigbaren bremsenseitigen Träger für die Aufnahme bzw. die Bildung des Bremssattels der Bremse aufweist, wobei der achsseitige Träger und der bremsenseitige Träger sich über axiale, d.h. in Achslängsrichtung weisende als auch über radiale, d.h. in Achsquerrichtung weisende Anlageflächen zur Aufnahme der in Achslängsrichtung wirkenden Kraftkomponenten als auch der im Fahr- und Bremsbetrieb auftretenden in Achsumfangsrichtung wirkenden Kräfte abstützen.

Bei einer derartigen bekannten Bremseinrichtung ist der achsseitige Träger großflächig über in der Regel sechs Befestigungsschrauben an eine axiale Stirnfläche des bremsseitigen Trägers angeflanscht, um die beim Fahr- und Bremsbetrieb auftretenden Kräfte aufnehmen zu können. Der Befestigungsaufwand ist daher verhältnismäßig groß. Es sind auch Scheibenbremsen mit einer sogenannten Tangentialverschraubung bekannt, bei welcher die Befestigungsschrauben tangential zum Kreisumfang von Bremse und Scheibe angeordnet sind. Hierdurch sollen die Verschraubungspunkte besser erreichbar, eine einfachere Montage durch den Einsatz von Standard-Steckschlüsseln und -verlängerungen sowie von Druckluftschraubern ermöglicht und eine schnellere Sattelmontage durch Reduzierung der Befestigungsschrauben auf nur noch vier erreicht werden. Da die Befestigungsschrauben hierbei tangential zum Kreisumfang von Bremse und Bremsscheibe angeordnet sind, hat diese Art der Befestigung grundsätzliche Nachteile, insbesondere in Bezug auf eine genaue Ausrichtung des Bremssattels zur Bremsscheibe.

Aus der DE 200 21 587 U1 ist eine Bremseinrichtung mit einem auf einer Radachse gehaltenen als Festsattel ausgebildeten Bremssattel bekannt, in welchem mindestens eine auf einer Radnabe verschiebbare Bremsscheibe angeordnet ist, die über eine mit dem Bremssattel verbundene Stelleinrichtung in eine Bremsposition zwischen Bremsbelägen und dem Bremssattel verschiebbar ist, wobei der Bremssattel mit der Radachse über ein oder mehrere Abstützelemente verbunden ist und an den Abstützelementen der Bremssattel über quer zur Radachse angeordnete Schrauben befestigbar ist. Hierbei haben Abstützelemente eine Absetzung, in welcher der Bremssattel gehalten bzw. über eine Formschluss an einer Verschiebung gehindert wird. Insbesondere ist der Bremssattel mit Vorsprüngen in der Absetzung gehalten. Die Absetzung weist rechtwinklig zu den Schrauben eine Fläche auf, zu der abgewinkelt eine weitere Fläche verläuft, die in der Längsebene der Schrauben liegt. Korrespondierend zu diesen Flächen verlaufen die Absetzungen. Auch hier muss der Bremssattel über quer zur Radachse angeordneten Schrauben befestigt werden. Die Bremseinrichtung erfordert eine hohe Fertigungsgenauigkeit der zueinander passenden Teile.

Die DE 198 55 275 B4 offenbart eine Brenseinrichtung gemäß dem Oberbegriff des Anspruchs 1. Daraus ist eine Teilbelagscheibenbremse in Form einer Festsattelbremse für um einen Achszapfen drehbare Räder von Fahrzeugen, insbesondere Kraftfahrzeugen, bekannt mit zum Achszapfen feststehendem Bremsträger und einem parallel zur Bremsscheibenebene geteiltem Bremsgehäuse, dessen Gehäusehälften gegeneinander und gegenüber dem Bremsträger lösbar verspannt sind. Der Bremsträger weist eine Ausnehmung auf, die als Gegenstück einen Abschnitt des Bremsgehäuses aufnimmt. Die Ausnehmung ist als radial nach außen randoffene, zum das Gegenstück bildenden Abschnitt des Bremsgehäuses in Randumlaufrichtung Formschluss aufweisende Aufnahme ausgebildet. Da der Bremssattel hier in einem gabelförmigen achsseitigen Bremsträger geführt ist, ist die Bremsbefestigung ebenfalls fertigungstechnisch aufwändig.

Weiter ist aus der US 6,315,087 B1 eine Bremseinrichtung bekannt, bei welcher mittels Stiften eine Montagehilfe für einen bremsenseitigen Träger gebildet wird.

Aufgabe der vorliegenden Erfindung ist es, eine Bremseinrichtung der eingangs genannten Art vorzuschlagen, bei welcher die im Brems- und Fahrbetrieb auftretenden Kräfte bei geringem Fertigungsaufwand und leichter Montage zuverlässig aufgenommen werden.

Diese Aufgabe wird bei einer Bremseinrichtung der eingangs genannten Art im Wesentlichen bspw. dadurch gelöst, dass die axialen und radialen Anlageflächen des achsseitigen Trägers bzw. des bremsenseitigen Trägers jeweils im Wesentlichen in ein und derselben axialen bzw. radialen Ebene liegen, und dass die Träger an ihren Anlageflächen mittels mindestens zweier achsparalleler Schrauben aneinander gehalten sind.

Somit sind sowohl die axialen als auch die radialen Anlageflächen des achsseitigen und des bremsseitigen Trägers insbesondere durch zwei achsparallele Schrauben aneinander gehalten. Erfindungsgemäß können auch vier Schrauben oder drei Schrauben bei vorzugsweise asymmetrischer Ausgestaltung der Träger vorgesehen sein. Hierdurch wird mit einem Minimum an Verschraubungsaufwand und rationeller Fertigung der Teile auf einfache Weise eine zuverlässige Funktionsweise der Bremseinrichtung mit Bremssattelbefestigung erreicht.

In besonderer Ausgestaltung der Erfindung sind die axialen Anlageflächen von beidseits im Abstand von der Fahrzeugachse liegenden verhältnismäßig kurzen Flächenabschnitte gebildet, welche in einer Ebene quer zur Fahrzeugachse liegen. Auf diese Weise sind die Kraftaufnahmeverhältnisse besonders günstig.

In Weiterbildung der Erfindung ist ferner vorteilhafterweise vorgesehen, dass die radialen Anlageflächen von beidseits im Abstand von der Fahrzeugachse liegenden verhältnismäßig kurzen Flächenabschnitten gebildet sind. Auch hierdurch wird die Kraftaufnahme besonders günstig gestaltet.

Bei einer weiteren Ausgestaltung der Erfindung ist ferner vorgesehen, dass die einander zugeordneten Flächenabschnitte der radialen und axialen Anlageflächen in seitlichen benachbarten Bereichen angeordnet und die beiden Schrauben in diesen Bereichen vorgesehen sind. Hierdurch wird die Funktion der Anlageflächen besonders zuverlässig gesichert.

Ferner können die Abstände zwischen den axialen Anlageflächen und zwischen den radialen Anlageflächen voneinander abweichen und die Schrauben in den Bereichen der axialen Flächenabschnitten vorgesehen sein. Insbesondere können in diesem Fall die axialen und die radialen Anlageflächen voneinander getrennt angeordnet sein, wobei die radialen Anlageflächen des achsseitigen und des bremsseitigen Trägers miteinander verschraubt sind.

Es zeigen:
- Fig. 1: schematisch in Schrägansicht eine die Erfindung aufweisende Bremseinrichtung gemäß einer ersten Ausführungsform,
- Fig. 2: schematisch in Ansicht eine die Erfindung aufweisende Bremseinrichtung gemäß einer zweiten Ausführungsform der Erfindung, sowie
- Fig. 3 und 3a bis 3e: mehrere Gestaltungsvarianten der Ausbildung der radialen Anlageflächen in nicht in einer gemeinsamen Ebene liegender und/oder in nicht ebener Ausführung, nicht gemäß der Erfindung.

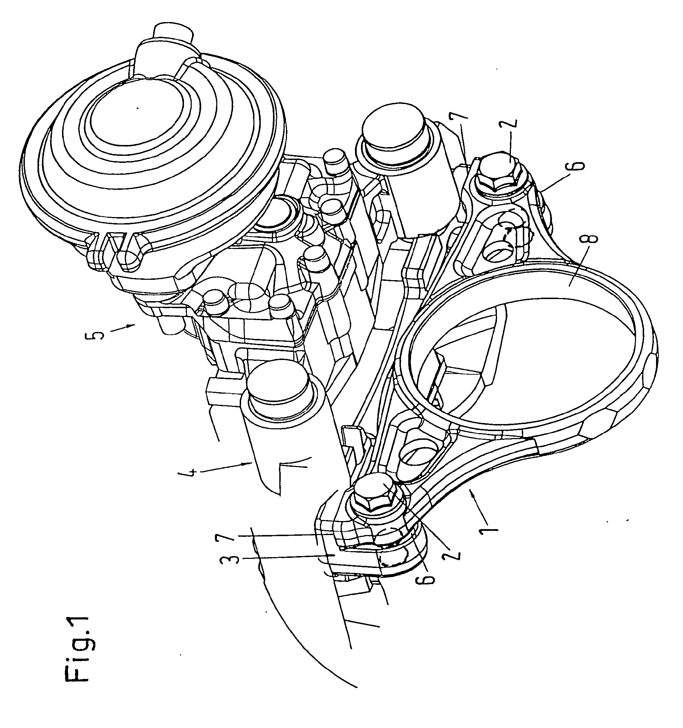

Die in Figur 1 dargestellte Bremseinrichtung ist für um Achszapfen drehbare Räder eines Kraftfahrzeuges bestimmt. Die Bremseinrichtung hat eine Bremssattelbefestigung, welche einen achsseitigen Träger 1 und einen bremsenseitigen Träger 3 für die Aufnahme des Bremssattels 4 der Bremse 5 aufweist. Der achsseitige Träger 1 ist auf der Fahrzeugachse festlegbar, wozu er z. B. eine entsprechende kreisrunde Aufnahmeöffnung 8 für eine z. B. als zylindrischer Achskörper ausgebildete (nicht dargestellte) Fahrzeugachse aufweist. Der bremsenseitige Träger 3 ist an dem achsseitigen Träger 1 lösbar mittels zweier achsparalleler Schrauben 2 im seitlichen Abstand von der Fahrzeugachse und z. B. symmetrisch zur Mittellängsebene der Bremseinrichtung lösbar befestigbar. Der achsseitige Träger 1 und der bremsseitige Träger 3 stützen sich über axiale, d. h. in Achslängsrichtung weisende im Wesentlichen ebene Anlagefläche 6 zur Aufnahme der beim Brems- und Fahrbetrieb in Achslängsrichtung wirkenden Kraftkomponenten aneinander ab. Der achsseitige Träger 1 und der bremsenseitige Träger 3 stützen sich ferner über radiale, d.h. in Achsquerrichtung (nach oben bzw. nach unten) weisende im Wesentlichen ebene, oberhalb der Fahrzeugachse liegende Anlageflächen 7 ab. Hierdurch werden die im Fahr- und Bremsbetrieb auftretenden in Achslängsrichtung wirkenden Kraftkomponenten als auch die in Achsumfangsrichtung wirkenden Kräfte zuverlässig aufgenommen. Die beidseits im Abstand von der Fahrzeugachse etwas oberhalb oder seitlich neben der geometrischen Mittelachse der Fahrzeugachse liegenden axialen Anlageflächen 6 des achsseitigen Trägers 1 und des bremsenseitigen Trägers 3 liegen jeweils im Wesentlichen in ein und derselben Ebene, welche sich quer zu der Fahrzeugachse erstreckt. Sie können aber auch in Achslängsrichtung parallel zueinander versetzt sein. In dem gleichen Abstandsbereich von der Fahrzeugachse befinden sich auch die radialen Anlageflächen 7 des achsseitigen Trägers 1 und des bremsseitigen Trägers 3, ebenfalls in einer im Wesentlichen gemeinsamen Ebene, welche in diesem Fall oberhalb der Fahrzeugachse in Längsrichtung derselben verläuft. Auch die radialen Anlageflächen 7 können in zueinander parallelen Ebenen versetzt zueinander liegen. Die Anordnung ist so getroffen, dass der Abstand der beiden achsparallelen Schrauben 2 von dem Außenumfang der Fahrzeugachse etwa dem Radius der Fahrzeugachse entspricht. Die Flächenabschnitte, welche die axialen und radialen Anlageflächen 6, 7 bilden, sind jedoch im Vergleich zu dem Radius der Fahrzeugachse und dem Abstand der Schrauben 2 von dem Außenumfang der Fahrzeugachse verhältnismäßig kurz.

Die einander zugeordneten Flächenabschnitte der axialen und radialen Anlageflächen 6, 7 befinden sich also in seitlichen benachbarten Bereichen, ebenso wie die Schrauben 2, welche die Anlageflächen 6 somit sicher aneinander halten.

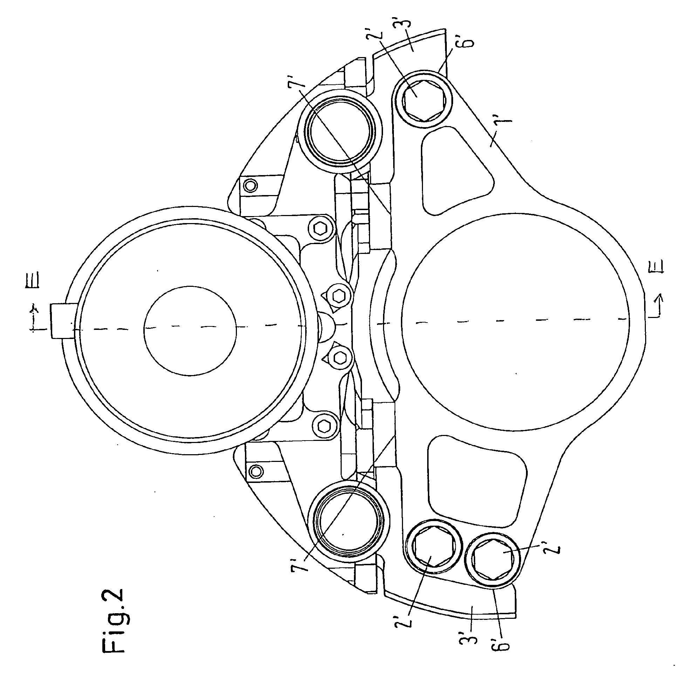

Die Figur 2 zeigt im Unterschied zu der Ausführung nach Figur 1 weitere Gestaltungsvarianten, wobei im Folgenden nur wesentliche Unterschiede erwähnt sind.

Zum Einen haben die axialen Anlageflächen 6' und die radialen Anlageflächen 7' unterschiedliche Abstände zueinander und damit zur Mittellängsebene E der Bremseinrichtung, was z. B. durch konstruktive Gegebenheiten des Bremssattels 4 oder verschiedener Bremssattelfabrikate erforderlich sein kann.

Zum Anderen kann es montagetechnisch sinnvoll oder bremsentechnisch sogar erforderlich sein, auf einer Bremsträgerseite oder auf jeder Bremsträgerseite mehr als nur eine Befestigungsschraube 2', also z. B. vier Schrauben 2' oder drei Schrauben 2' bei vorzugsweise asymmetrischer Ausgestaltung der Träger 1' und 3', vorzusehen sind.

Dargestellt ist in Fig. 2 eine Ausführungsform, in welcher der achsseitige Träger 1' und der bremsseitige Träger 3' mit insgesamt drei Schrauben 2' aneinander gehalten sind. Von der (nicht dargestellten) Fahrzeugachse aus gesehen sind auf einer Seite der achsseitigen und bremsseitigen Träger 1', 3' zwei Schrauben 2' in einer flächenmäßig größeren axialen Anlagefläche 6' und auf der andren Seite der achsseitigen und bremsseitigen Träger 1', 3' eine Schraube 2' in einer flächenmäßig kleineren axialen Anlagefläche 6' vorgesehen. Die Träger 1', 3' sind also asymmetrisch ausgestaltet.

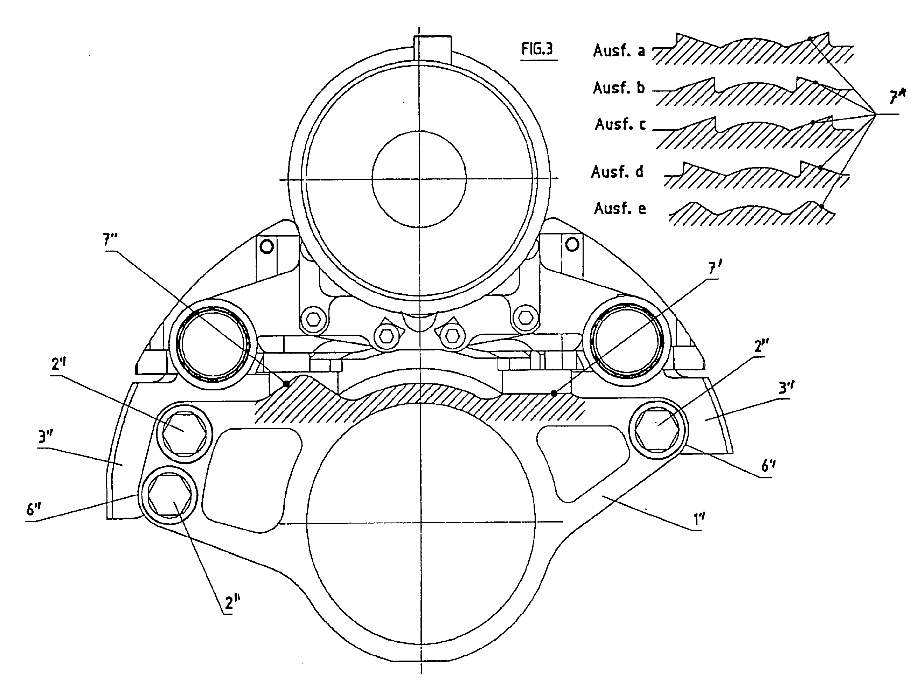

Während die Figuren 1 und 2 Ausführungsarten darstellen, bei welchen die radialen Anlageflächen 7 in sich im Wesentlichen eben sind und rechts und links von dem Achskörper im Wesentlichen in einer Ebene oder in zueinander parallel versetzten Ebenen liegen, zeigen die Figuren 3 und 3a bis 3e Ausführungen, bei welchen die radialen Anlageflächen 7 rechts und links des Achskörpers nicht in einer Ebene liegen, sondern zwar in sich eben, aber positiv oder negativ schräg zueinander gestellt sind und dadurch nicht im Wesentlichen in einer gemeinsamen Ebene liegen, oder bereits in sich nicht eben, sondern z. B. positiv oder negativ V-förmig prismatisch ausgebildet sind.

So zeigt z. B. Figur 3 eine weitere Gestaltungsform, die aus den Figuren 2 und 3e kombiniert ist. Diese Kombination, nicht gemäß der Erfindung, ist auch interessant, weil durch die, einen prismatischen Sitz bildende radiale Anlagefläche 7" wenigstens auf der einen Seite der achs- und bremsseitigen Träger 1', 3' das Ausrichten bei der Montage erleichtert und eine bremskraftbedingte horizontale Verschiebung beider Bauteile aneinander verhindert wird, was auch Scherkräfte und Lösetendenzen an den Schrauben 2" vermeidet. Wenn nur eine prismatische Form (7") ausreicht, ist es sinnvoll, die radialen Anlageflächen 7, 7' auf der anderen Seite in der Radialebene und in sich eben zu belassen, um praxis- und fertigungsgerechte Toleranzfehler zu berücksichtigen und auf jeder Seite nur eine Schraube 2' vorzusehen.

Andere Kombinationen von nach innen oder nach außen schräg gestellter radialer Anlageflächen ergeben sich aus den Fig. 3a, 3b, 3d und 3e. Hierbei können die Einzeldarstellungen in beliebiger Weise untereinander und/oder mit einer ebenen, nicht schräg gestellten Anlagefläche 7, 7' kombiniert und auch bezüglich der Lage der Anlageflächen 7" von oben nach unten gekehrt sein, so z. B. die in sich prismatischen Anlageflächen 7", die dann V-förmig nach unten zusammenlaufen.

Alle Kombinationen von schräg oder prismatisch angeordneten radialen Anlageflächen, wie beschrieben, sind auch auf die axialen Anlageflächen 6, 6', 6" anwendbar.

### Bezugszeichenliste

- 1; 1'; 1 ": achsseitiger Träger
- 2; 2'; 2": Schrauben
- 3; 3'; 3": bremsenseitiger Träger
- 4: Bremssattel
- 5: Bremse
- 6; 6'; 6": axiale Anlageflächen
- 7; 7'; 7": radiale Anlageflächen
- 8: Aufnahmeöffnung

- E: Mittellängsebene

## Patentansprüche

1. Bremseinrichtung für um Achszapfen drehbare Räder eines Kraftfahrzeuges, mit einer Bremssattelbefestigung, welche einen auf der Fahrzeugachse festlegbaren achsseitigen Träger (1) und einen daran mittels Schrauben (2) lösbar befestigbaren bremsenseitigen Träger (3) für die Aufnahme des Bremssattels (4) der Bremse (5) aufweist, wobei der achsseitige Träger (1) und der bremsenseitige Träger (3) sich über axiale, d,h. in Achslängsrichtung weisende, als auch über radiale, d.h. in Achsquerrichtung weisende Anlageflächen (6, 6'; 7, 7') zur Aufnahme der in Achslängsrichtung wirkenden Kraftkomponenten als auch der im Fahr- und Bremsbetrieb auftretenden in Achsumfangsrichtung wirkenden Kräfte aneinander abstützen, **dadurch gekennzeichnet, dass** die axialen und radialen Anlageflächen (6, 6'; 7, 7') des achsseitigen Trägers (1) bzw. des bremsenseitigen Trägers (3) jeweils im Wesentlichen in ein und derselben axialen bzw. radialen Ebene liegen, und dass die Träger (1, 3) an ihren Anlageflächen (6, 6'; 7, 7') mittels mindestens zweier achsparalleler Schrauben (2) aneinander gehalten sind.

2. Bremseinrichtung nach Anspruch 1, **dadurch gekennzeichnet, dass** die axialen Anlageflächen (6, 6') von beidseits im Abstand von der Fahrzeugachse liegenden verhältnismäßig kurzen Flächenabschnitten gebildet sind.

3. Bremseinrichtung nach Anspruch 1 oder 2, **dadurch gekennzeichnet, dass** die radialen Anlageflächen (7, 7') von beidseits im Abstand von der Fahrzeugachse liegenden verhältnismäßig kurzen Flächenabschnitten gebildet sind.

4. Bremseinrichtung nach einem der Ansprüche 1 bis 3, **dadurch gekennzeichnet, dass** die einander zugeordneten Flächenabschnitte der axialen und radialen Anlageflächen (6, 6'; 7, 7') in seitlichen benachbarten Bereichen angeordnet und die Schrauben (2) in diesen Bereichen vorgesehen sind.

5. Bremseinrichtung nach einem der Ansprüche 1 bis 3, **dadurch gekennzeichnet, dass** die Abstände zwischen den axialen Anlageflächen (6') und zwischen den radialen Anlageflächen (7') voneinander abweichen und die Schrauben (2') in den Bereichen der axialen Anlageflächen (6') vorgesehen sind.

## Claims

1. A braking device for motor vehicle wheels rotatable about axle pins with a brake calliper attachment, which comprises a carrier (1) on the axle side that can be fixed to the vehicle axle and a brake-sided carrier (3) that can be detachably fastened thereon by means of screws (2) to accommodate the brake calliper (4) of the brake (5), wherein the axle-sided carrier (1) and the brake-sided carrier (3) support themselves on each other via axial contact surfaces (6, 6'; 7, 7') i.e. contact surfaces facing in axle longitudinal direction as well as via radial contact surfaces, i.e. contact surfaces facing in axle transverse direction to accommodate the force components acting in axle longitudinal direction as well as the forces acting in axle circumferential direction also in driving and braking mode, **characterized in that** the axial and radial contact surfaces (6, 6'; 7, 7') of the axle-sided carrier (1) and the brake-sided carrier (3) each substantially lie in one and the same axial and radial plane respectively and that the carriers (1, 3) at their contact surfaces (6, 6'; 7, 7') are held together by means of at least two screws (2) parallel with the axis.

2. The braking device according to Claim 1, **characterized in that** the axial contact surfaces (6, 6') are formed by relatively short surface sections lying spaced from the vehicle axle on both sides.

3. The braking device according to Claim 1 or 2, **characterized in that** the radial contact surfaces (7, 7') are formed by relatively short surface sections located spaced from the vehicle axle on both sides.

4. The braking device according to any one of the Claims 1 to 3, **characterized in that** the surface sections of the axial and radial contact surfaces (6, 6'; 7, 7') dedicated to each other are arranged in laterally adjacent regions and the screws (2) are provided in these regions.

5. The braking device according to any one of the Claims 1 to 3, **characterized in that** the spacings between the axial contact surfaces (6') and between the radial contact surfaces (7') deviate from each other and the screws (2') are provided in the regions of the axial contact surfaces (6').

## Revendications

1. Dispositif de freinage pour des roues, pouvant tourner autour de fusées d'essieu, d'un véhicule automobile, comprenant une fixation d'étrier de frein, qui présente un support (1) côté essieu pouvant être fixé sur l'essieu du véhicule et un support (3) côté frein, pouvant être fixé de façon amovible au moyen de vis (2), pour le logement de l'étrier de frein (4) du frein (5), le support (1) côté essieu et le support (3) côté frein s'appuyant l'un sur l'autre au moyen de surfaces d'appui (6, 6' ; 7, 7') radiales, c'est-à-dire dirigées dans la direction transversale de l'essieu pour la réception des composantes de force agissant dans la direction de l'axe longitudinal de même que des forces agissant dans la direction périphérique de l'essieu et apparaissant lors du roulement et du freinage, **caractérisé en ce que** les surfaces d'appui (6, 6' ; 7, 7') axiales et radiales du support (1) côté essieu et du support (3) côté frein sont disposées respectivement essentiellement dans un seul et même plan axial ou radial et **en ce que** les supports (1, 3) sont maintenus les uns près des autres sur leurs surfaces d'appui (6, 6' ; 7, 7') au moyen d'au moins deux vis (2) à axes parallèles.

2. Dispositif de freinage selon la revendication 1, **caractérisé en ce que** les surfaces d'appui (6, 6') axiales sont formées par des parties de surface relativement courtes et situées des deux côtés à distance de l'essieu du véhicule.

3. Dispositif de freinage selon la revendication 1 ou 2, **caractérisé en ce que** les surfaces d'appui (7, 7') radiales sont formées par des parties de surface relativement courtes et disposées des deux côtés à distance de l'essieu du véhicule.

4. Dispositif de freinage selon l'une quelconque des revendications 1 à 3, **caractérisé en ce que** les parties de surface affectées les unes aux autres des surfaces d'appui (6, 6' ;'7, 7') axiales et radiales sont disposées dans des zones voisines latérales et les vis (2) sont prévues dans ces zones.

5. Dispositif de freinage selon l'une quelconque des revendications 1 à 3, **caractérisé en ce que** les espacements entre les surfaces d'appui (6') axiales et entre les surfaces d'appui (7') radiales diffèrent les uns des autres et les vis (2') sont prévues dans les zones des surfaces d'appui (6') axiales.
